# EUROPEAN PATENT SPECIFICATION

(11) **EP 2 672 143 B1**
(45) Date of publication and mention of the grant of the patent: **06.04.2016**
(21) Application number: 12192771.9
(22) Date of filing: 15.11.2012
(51) Int. Cl.: F16H 33/06, F03G 1/02

(54) **Energy storing device in which energy is stored through spring torsion**
Energiespeichervorrichtung, bei der die Energie durch Federtorsion gespeichert wird
Dispositif de stockage d'énergie dans lequel l'énergie est stockée par torsion de ressort

(30) Priority: 08.06.2012 TW 101120653
(43) Date of publication of application: 11.12.2013
(73) Proprietor: Chio, Chuy-Nan, 105 Taipei City (TW)
(72) Inventor: Chio, Chuy-Nan, 105 Taipei City (TW)
(74) Representative: Viering, Jentschura & Partner mbB Patent- und Rechtsanwälte

(56) References cited:
- EP-A1- 2 039 930
- CN-A- 101 328 865
- GB-A- 139 126
- US-B1- 6 523 646

## Description

### Background of the invention

### 1. Field of the invention

The invention generally relates to an energy storing device. More particularly, the invention relates to an energy storing device that may receive energy from various types of energy sources, store it through spring torsion and output it.

### 2. Description of the prior art

Because there is only a limited amount of petroleum available in the earth, it will definitely be used up some day in the future. In addition, the control and distribution of petroleum resources have been in the hands of a few countries. Moreover, the combustion or use of petroleum seriously impacts the environment. The development of new energy sources has been an important topic.

In fact, there have been many types of green energy sources, such as solar energy, wind power, hydropower, etc., and these sources will remain available for a long time. However, these types of green energy sources have to be converted into a form that may be used. In addition, they are not stable. For examples, solar energy is not available at night. Wind sometimes is strong and sometimes is weak, and thus, is not stable. Hydropower may becomes unusable during dry seasons. Therefore, a crucial point in the use of a green energy source is that energy should be stored away when it is supplied plentifully, and energy may be output from a device when the output of an energy source dwindles.

Regarding the conversion of energy into a form that may be used, a device that may be used to accomplish such conversion is the invention with the ROC patent number 197,189 (invented by the inventor of the present invention) with the title of "Energy Storing Set In Which Energy Is Stored Through Spring Torsion". Such an energy storing set comprises a casing, energy storing units and a transmission box. The energy storing units and a transmission box are housed in the casing. Each of the energy storing units comprises a longitudinal rod, a plurality of rotational disc portions and a plurality of spiral springs. An outer retaining protrusion and an inner retaining groove are provided on each disc portion. A spiral spring is provided between two disc portions, and the two ends of the spring are retained by the outer retaining protrusion and inner retaining groove. An energy input axle is provided outside the casing and may pass the energy to drive the first rotational disc portion. In addition, the transmission box has an energy input end and an energy output end. The energy output axle sticks out of the casing. Several cog-wheels are provided inside the transmission box and may engage with a rotational disc disposed inside the box. Therefore, in the energy storing set, energy is stored through spring torsion and then may be output steadily.

Such an energy storing set may be used to store energy and output energy steadily. However, such an energy storing set has disadvantages. Its biggest drawback is the insufficiency of spring torsion because of the conventional spiral springs used in the energy storing set. Therefore, the efficiency of energy storage is quite low. Another drawback is the single-directional input bearings because these bearings may be damaged easily if the magnitude of torsion that is input into the energy storing set becomes too great. Therefore, such an energy storing set may be used for small-size energy sources and can not be used for large-size energy sources, such as a power plant.

To eliminate these disadvantages, the inventor of the present invention has put a lot of effort into the subject and has successfully come up with the energy storing device of the present invention.

Document EP2039930, which is considered to represent the most relevant state of the art, discloses an energy storing device using springs for accumulating energy with a plurality of cog-wheels, wherein a cog-wheel is connected with an energy source and the energy output from the storing device is applied to a torsion magnitude limiting unit to prevent excessive torques and damage of the energy storing device.

### Summary of the invention

The main object of the present invention is to provide an energy storing device that may be used for various types of energy generating units to store energy through spring torsion and may release energy when an energy generating unit stops supplying energy.

A second object of the present invention is to provide an energy storing device that may maintain a steady energy output.

A third object of the present invention is to provide an energy storing device that has a high efficiency of energy storage and takes up a limited amount of space.

To reach the objects, the energy storing device of the present invention is disclosed. In the energy storing device of the present invention, energy from an energy generating unit is stored in the form of spring torsion and then is output in a steady manner. The energy storing device of the present invention comprises a plurality of cog-wheels, a plurality of torsion magnitude limiting units, a plurality of single-directional input bearings, a plurality of energy storing units and a plurality of speed increasing cog-wheels. A rotational energy source is connected with the cog-wheels, and the torsion magnitude and direction of input energy are limited by the torsion magnitude limiting units and single-directional input bearings, respectively. Then, the input energy is stored in the energy storing units through the compression of the springs. The energy in the form of the compression may be output through the speed increasing cog-wheels. If the torsion magnitude exceeds a pre-determined value of the torsion magnitude limiting units, the torsion magnitude limiting units would interrupt the input of the torsion by the way of idling to prevent the damage of the energy storing units. The single-directional input bearings only allow the single-directional passage of the torsion from each of the twisting force limiting units to the energy storing units, to prevent passage of the torsion in the opposite direction so as to protect the torsion magnitude limiting units and cog-wheels. Each of the energy storing units includes at least two end rotational disc portions, which are connected with each other co-axially. A leaf spring unit is provided between each pair of rotational disc portions ,and one end of the leaf spring units is bent in an opposite direction (opposite to the winding direction of the leaf spring) and is retained in a retaining groove to increase its torsion. The speed increasing cog-wheels are connected with the output end rotational disc portions to increase the rotational speed, so as to output the energy. In addition, the energy storing units may be connected in series or in parallel to increase the efficiencies in energy storage and energy output.

### Brief description of the drawings

Fig. 1 is a perspective view of the energy storing device of the present invention.
Fig. 2 is a side view of the energy storing device of the present invention.
Fig. 2A is an enlarged view illustrating how an output end rotational disc portion is connected with the speed increasing cog-wheels.
Fig. 3 is a block diagram illustrating the use of the energy storing device of the present invention in a wind turbine system.
Fig. 4 is an exploded view illustrating how a leaf spring unit is connected with an end rotational disc portion in the first type of connective method.
Fig. 5 is another exploded view illustrating how a leaf spring unit is connected with an end rotational disc portion in the first type of connective method.
Fig. 6 is a longitudinal view illustrating how leaf spring units are disposed in an energy storing unit in the first type of connective method.
Fig. 7 is a perspective view illustrating how leaf spring units are disposed in an energy storing unit in the first type of connective method.
Fig. 8 is an exploded view illustrating how a leaf spring unit is connected with an end rotational disc portion in the second type of connective method.
Fig. 9 is another exploded view illustrating how a leaf spring unit is connected with an end rotational disc portion in the second type of connective method.
Fig. 10 is a longitudinal view illustrating how leaf spring units are disposed in an energy storing unit in the second type of connective method.
Fig. 11 is a perspective view illustrating how leaf spring units are disposed in an energy storing unit in the second type of connective method.
Fig. 12 is a perspective view illustrating how the energy storing units are connected in series.
Fig. 13 is a perspective view illustrating how the energy storing units are connected in parallel.

**List of reference numerals**

| | |
|---|---|
| 1 Energy storing device | 11 Cog-wheels |
| 12 Torsion magnitude limiting units | 13 Single-directional input bearings |
| 14 Energy storing units | 140 Middle rotational disc portions |
| 141 Leaf spring units | 142 Input end rotational disc portions |
| 143 Output end rotational disc portions | 144 Central retaining portions |
| 145 Inner retaining grooves | 146 Outer retaining grooves |
| 147 Inner ends | 148 Outer ends |
| 149 Wavy pattern | 15 Speed increasing cog-wheels |
| 16 Energy input end | 17 Energy output end |
| 2 Energy generating unit | 21 Wind speed measuring device |
| 3 Generator | 4 Computer control unit |
| 51 Clutch | 52 Flywheel |
| 53 Transmission box | 61 Electromagnetic brake |
| 62 Continuous speed varying box | 63 Speed control unit |
| 64 Flywheel | 65 Clutch |

### Detailed description of the preferred embodiment

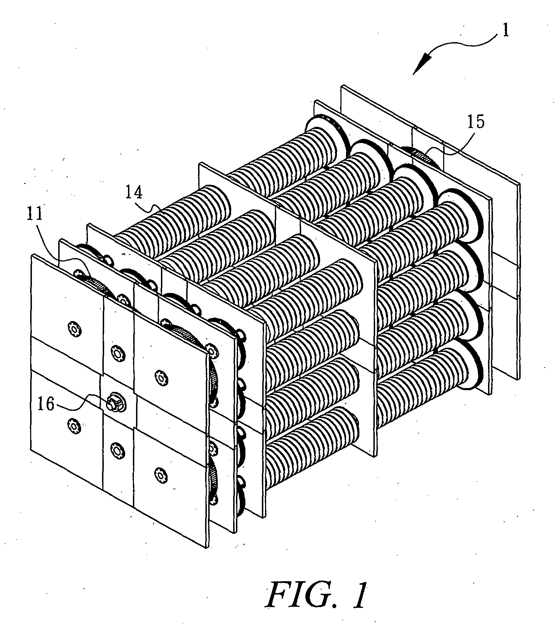

Please see Figs. 1 to 3, which illustrate the energy storing device 1 of the present invention. The energy storing device 1 of the present invention comprises a plurality of cog-wheels 11, a plurality of torsion magnitude limiting units 12, a plurality of single-directional input bearings 13, a plurality of energy storing units 14 and a plurality of speed enhancing cog-wheels 15. An energy source is connected with the cog-wheels 11 and the torsion magnitude and direction of input energy are limited by the torsion magnitude limiting units 12 and single-directional input bearings 13, respectively. Then, the input energy is stored in the energy storing units 14 through spring torsion. The stored energy may be output through the speed enhancing cog-wheels 15.

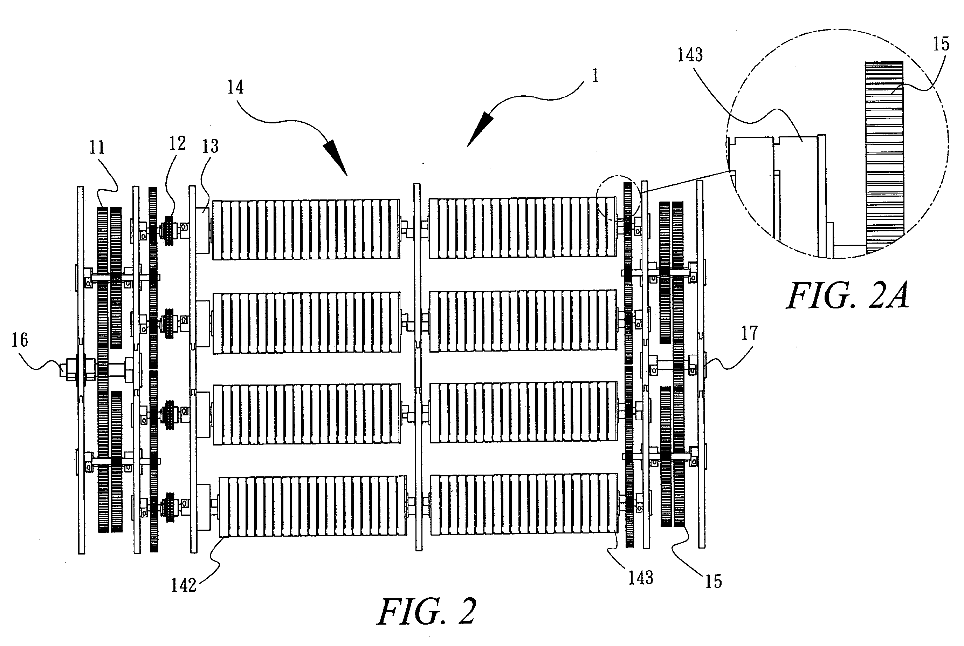

In detail, first, when the energy is input, the torsion prompts the cog-wheels 11 to rotate. Then, if the magnitude of the torsion exceeds a pre-determined value of the torsion magnitude limiting units 12, the torsion magnitude limiting units 12 would interrupt the input of the torsion through idling to prevent the damage of the energy storing units 14. Each of single-directional input bearings 13 is connected with the output end of the corresponding torsion magnitude limiting device 12 and only allows the single-directional passage of the torsion from each of the torsion magnitude limiting units 12 to the corresponding energy storing set 14, preventing passage of the torsion in the opposite direction so as to protect the torsion magnitude limiting units 12 and cog-wheels 11. Each of the energy storing units 14 includes at least two end rotational disc portions 142 and 143, which are connected with each other co-axially. A leaf spring unit 141 is provided between each pair of end rotational disc portions 142 and 143. In addition, one end of the leaf spring unit 141 is bent in an opposite direction. The input end of each rotational disc portion 142 is connected with the output end of the corresponding single-directional input bearing 13, and the output end of rotational disc portions 143 is connected with the speed increasing cog-wheels 15 (please see Fig. 2A). When the speed enhancing cog-wheels 15 are inactivated, the rotational disc portions 143 would remain still. Therefore, each rotational disc portion 142 may rotate with respect to the corresponding rotational disc portion 143. When the speed enhancing cog-wheels 15 are activated, the torsion stored in the rotational disc portions 143 may be sped up and then output.

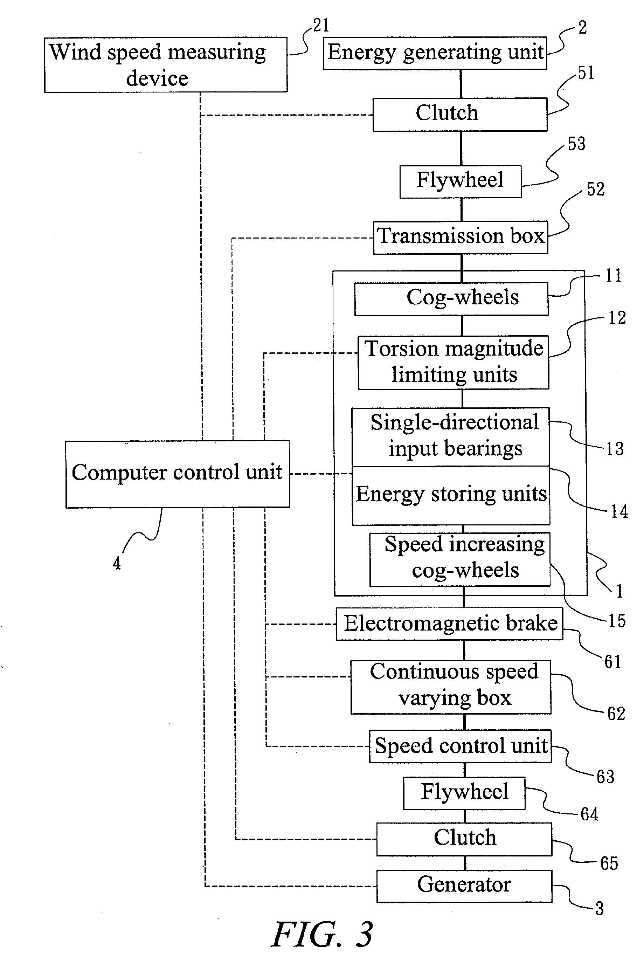

As illustrated in Fig. 2, the energy storing device 1 of the present invention is actually a part of a larger energy supplying system. In this embodiment, the system is a wind turbine. An energy generating unit 2 that may receive rotational energy from wind, water, human or other types of sources is connected with an energy input end 16 of the energy storing device 1. A clutch 51 is provided between the energy input end 16 and the energy generating device 2, and a wind speed measuring device 21 may also be provided so as to determine the activation of the clutch 51 according to the magnitude of the rotational speed. In addition, a transmission box 53 and a flywheel 52 are provided between the energy input end 16 and the clutch 51. The flywheel 52 is provided to stabilize the energy output of the energy generating device 2, and the transmission box 53 is provided to reduce the rotational speed of the energy generating device 2 so as to increase the magnitude of the torsion. As illustrated in Fig. 3, an electromagnetic brake 61, a continuous speed varying box 62, a speed control unit 63, a flywheel 64, a clutch 65 and a generator 3 are provided in the left to right order in Fig. 3. The electromagnetic brake 61 is provided to reduce or stop the energy output of the speed increasing cog-wheels 15. The continuous speed varying box 62 is provided to maintain the rotational speed of the energy output. The speed control unit 63 is provided to control the rotational speed of the energy output. The flywheel 64 is provided to stabilize the energy output. The clutch 65 is provided to control the passage of the energy output to the generator 3.

The clutch 51, wind speed measuring device 21, transmission box 53, torsion magnitude limiting units 12, energy storing units 14, electromagnetic brake 61, continuous speed varying box 62, speed control unit 63, clutch 65 and generator 3 are connected with a computer control unit 4 to control the overall operation.

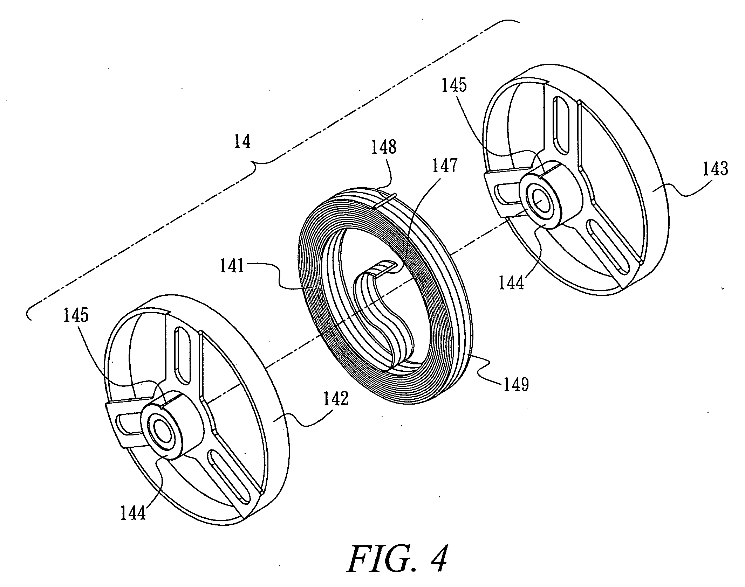

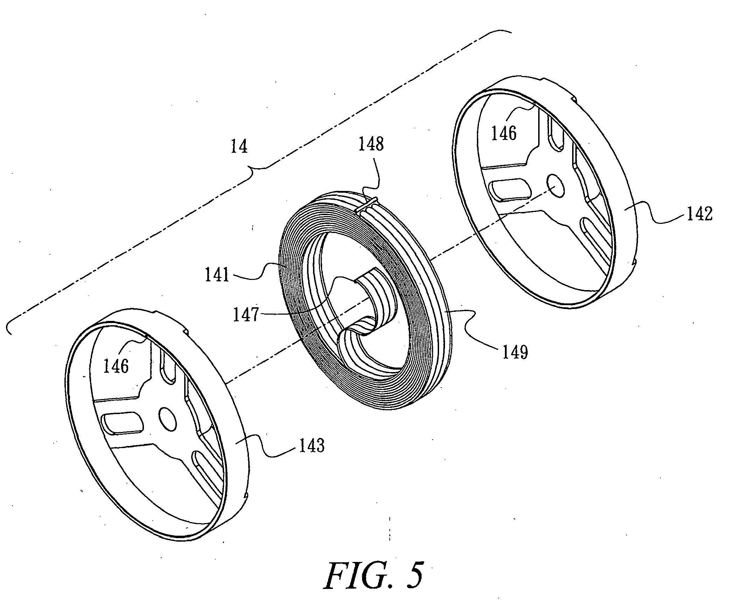

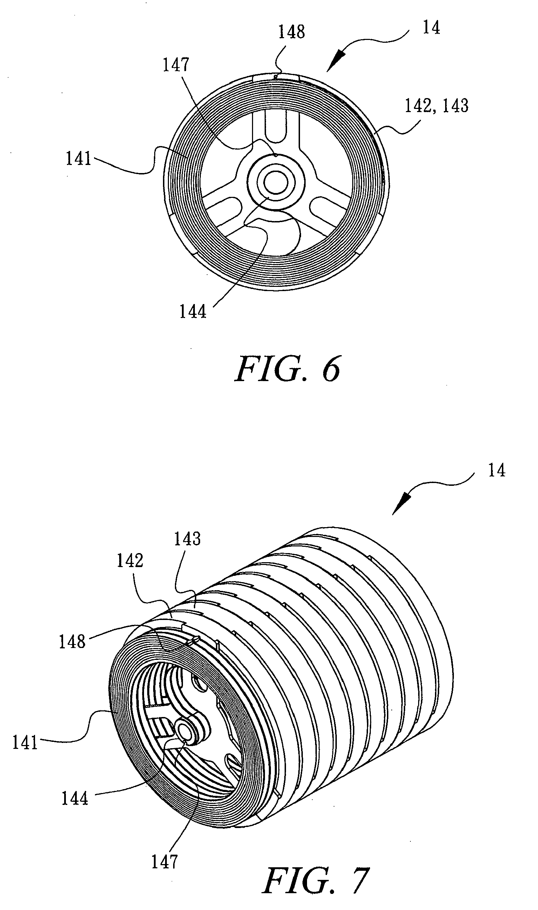

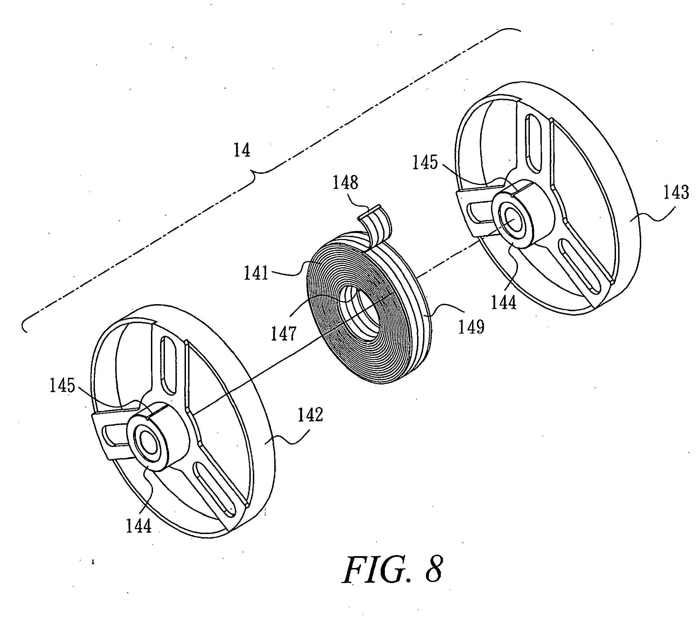

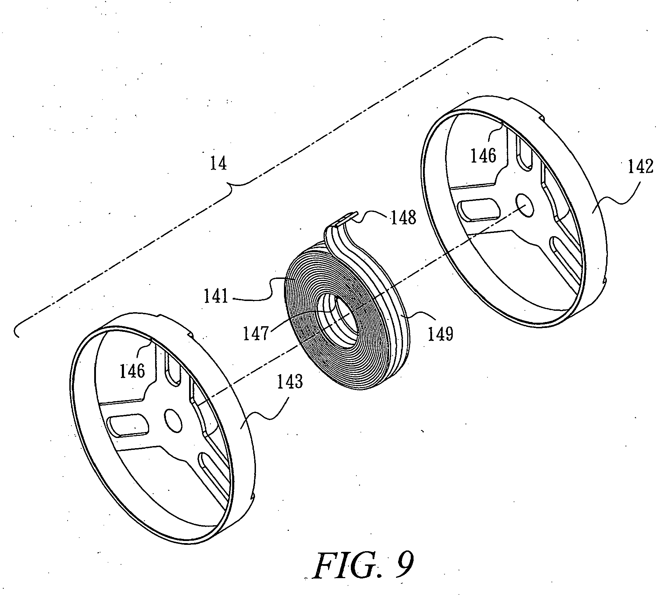

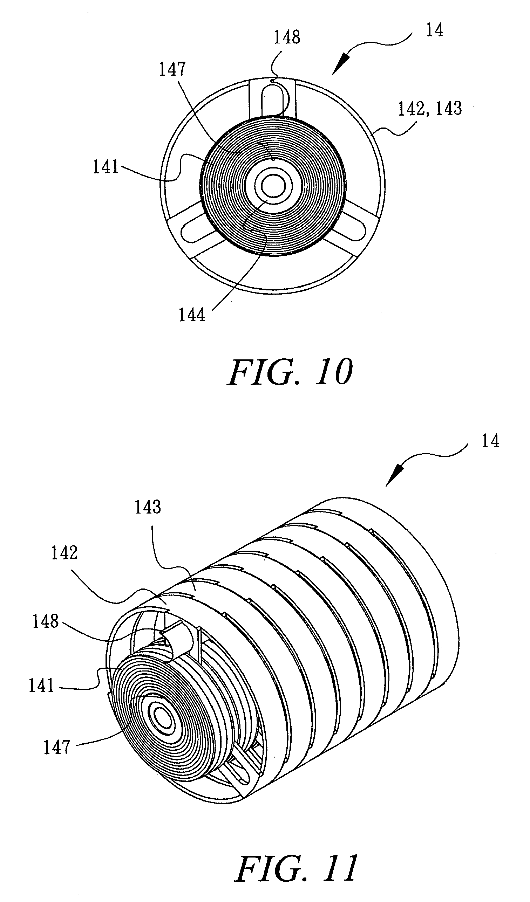

As illustrated from Figs. 4 to 11, to enhance the energy storing efficiency, each leaf spring unit 141 has an opposite-direction bending design. A central retaining portion 144 is centrally provided in each input end rotational disc portion 142 and 143. An outer retaining groove 146 is provided at an outer position of each rotational disc portion 142 and 143, and an inner retaining groove 145 is provided in each central retaining portion 144. The inner end 147 of each leaf spring unit 141 is retained in the inner retaining groove 145, and the outer end 148 of each leaf spring unit 141 is bent in an opposite direction and retained in the outer retaining groove 146. There are two types of connective methods for the leaf spring units 141. In the first type, the inner end 147 of each leaf spring unit 141 is first retained in the inner retaining groove 145, and then the outer end 148 is bent in an opposite direction (i.e., opposite to the winding direction of the leaf spring) and is retained the outer retaining groove 146. In the second type, the outer end 148 of each leaf spring unit 141 is first retained in the outer retaining groove 146 and then the inner end 147 is bent in an opposite direction (i.e., opposite to the winding direction of the leaf spring) and is retained the inner retaining groove 145. Therefore, a plurality of rotational disc portions 142 and 143 may be linked up by the leaf spring units 141 so as to enhance the energy storing efficiency. In addition, a wavy pattern 149 may be provided on the surface of each leaf spring unit 141 so as to enhance its energy storing efficiency.

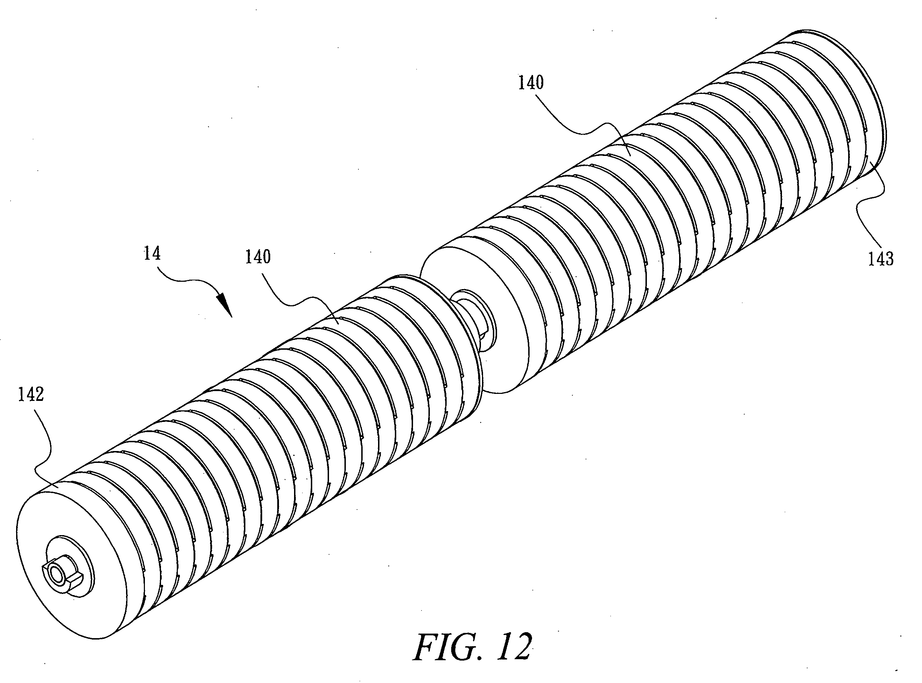

As illustrated in Fig. 12, a plurality of middle rotational disc portions 140 are co-axially provided between each pair of end rotational disc portions 142 and 143. Each input end rotational disc portion 142 at the input end is connected with the output end of the single-directional input bearings 13, and each output end rotational disc portion 143 at the output end is connected with the speed increasing cog-wheels 15. Also a leaf spring unit 141 is provided between each input end rotational disc portion 142 and each middle rotational disc portion 140, as well as between each middle rotational disc portion 140 and each output end rotational disc portion 143. When the speed increasing cog-wheels 15 are inactivated, the speed increasing cog-wheels 15 may lock up the output end rotational disc portions 143 so as to allow the input end rotational disc portions 142 to rotate and thus store energy. In the mean time, the leaf spring units 141 would cause the middle rotational disc portions 140 to rotate so as to store the energy until no energy can be input. When the speed increasing cog-wheels are activated, the output end rotational disc portions 143 may cause the middle rotational disc portions 140 and the input end rotational disc portions 142 to rotate to speed up the output of energy through the leaf spring units 141.

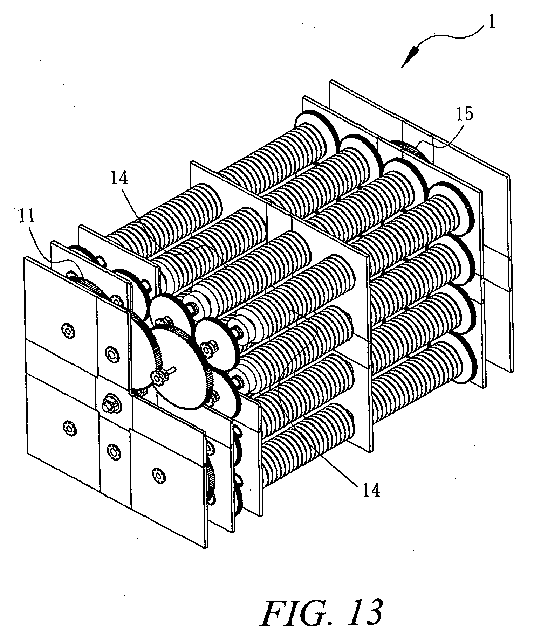

Fig. 13 illustrates another embodiment. The energy storing units 14 may be arranged in parallel, and the cog-wheels may distribute the energy to the energy storing units 14. Also, energy may be output through the speed increasing cog-wheels 15. In addition, each of the energy storing units 14 has its own torsion magnitude limiting unit 12 and single-directional input bearing 13.

The energy storing device of the present invention has the following advantages:
1. The energy storing device of the present invention may be used for various types of energy generating units to store energy through spring torsion. In addition, the energy storing device may release energy when an energy generating unit stops supplying energy and may store energy when an energy generating unit supplies energy so as to maintain a continuous energy output.
2. In the energy storing device of the present invention, a steady energy output may be maintained: energy generated by an energy generating unit is first input into the energy storing device of the present invention and then is output in a steady magnitude through the adjustment of proper rotational speed.
3. The energy storing device of the present invention has a high efficiency of energy storage and takes up a limited amount of space. Therefore, the device of the present invention is quite useful.
4. The energy storing device of the present invention may be used inside motor vehicles, electric fans, shaver, toy cars and other devices that utilizes rotational energy. The device of the present invention may also be used with a small power generator to enable such small generator to be used as an emergency energy source in home or in the outdoor.
5. In the energy storing device of the present invention, energy may be input manually; the device may be used with a sports device, such as a bicycle. Therefore, energy may be gradually accumulated and then be converted to a steady, greater energy output.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. An energy storing device in which energy is stored through spring torsion, comprising:
a plurality of cog-wheels, wherein each input end of the cog-wheels is connected with an energy source, which is in the form of a rotational force and the energy output from the cog-wheels is in the form of a torsion;
a plurality of torsion magnitude limiting units, connected with the output ends of the cog-wheels, wherein if the magnitude of the torsion exceeds a pre-determined value of the torsion magnitude limiting units, the torsion magnitude limiting units interrupt the torsion by the way of idling to prevent the damage of the energy storing units;
a plurality of single-directional input bearings, connected with the output ends of the torsion magnitude limiting units to only allow the single-directional passage of the torsion from each of the torsion magnitude limiting units to the corresponding energy storing set and to prevent the passage of the rotational force in the opposite direction so as to protect the torsion magnitude limiting units and cog-wheels;
a plurality of energy storing units, wherein each of the energy storing units includes at least two rotational disc portions, which are connected with each other co-axially, and a leaf spring unit is provided between each pair of rotational disc portions, the two ends of each leaf spring unit are connected with a central retaining portion and a retaining groove and one end of the each leaf spring unit is bent in an opposite direction so as to increase the energy storage efficiency; and
a plurality of speed increasing cog-wheels, connected with the output end rotational disc portions, wherein the speed increasing cog-wheels may lock up the rotational disc portions when the speed increasing cog-wheels are inactivated so as to allow the rotational disc portions at the output ends of the energy storing units to rotate and thus store energy and the speed increasing cog-wheels may increase the rotational speed of the output end rotational disc portions to output the energy when the speed increasing cog-wheels are activated.

2. The energy storing device as in claim 1, wherein the cog-wheels are connected with an energy generating unit, which acts as an energy source, and a clutch, a flywheel and a transmission box are provided between the energy generating unit and the cog-wheels, the clutch is provided to control the passage of the energy from the energy generating unit to the transmission box, the flywheel is provided to stabilize the energy output of the energy generating unit through rotational inertia and the transmission box is provided to reduce the rotational speed of the energy generating unit so as to increase the magnitude of the torsion so as to facilitate the storage of energy.

3. The energy storing device as in claim 1, wherein the output ends of the speed increasing cog-wheels are connected with a generator and an electromagnetic brake, a continuous speed varying box, a speed control unit, a flywheel and a clutch are provided between the speed increasing cog-wheels and the generator, the electromagnetic brake is provided to reduce or stop the energy output of the speed increasing cog-wheels, the continuous speed varying box is provided to maintain the rotational speed of the energy output, the speed control unit is provided to control the rotational speed of the energy output and the flywheel is provided to stabilize the energy output and wherein the clutch is provided to control the passage of the energy output to the generator.

4. The energy storing device as in claim 1, wherein a central retaining portion is centrally provided in each rotational disc portion, and wherein an outer retaining groove is provided at an outer position of each rotational disc portion and an inner retaining groove is provided in each central retaining portion, the inner end of each leaf spring unit is retained in the inner retaining groove and the outer end of each leaf spring unit is bent in an opposite direction and retained in the outer retaining groove.

5. The energy storing device as in claim 1, wherein a central retaining portion is centrally provided in each rotational disc portion, and wherein an outer retaining groove is provided at an outer position of each rotational disc portion and an inner retaining groove is provided in each central retaining portion, the outer end of each leaf spring unit is retained in the outer retaining groove and the inner end of each leaf spring unit is bent in an opposite direction and retained in the inner retaining groove.

6. The energy storing device as in claim 1, wherein a wavy pattern may be provided on the surface of each leaf spring unit so as to enhance its energy storing efficiency.

7. The energy storing device as in claim 1, wherein a plurality of middle rotational disc portions are co-axially provided between each pair of end rotational disc portions, and wherein each input end rotational disc portion is connected with the output end of the single-directional input bearings and each output end rotational disc portion is connected with the speed increasing cog-wheels, and wherein a leaf spring unit is provided between each end rotational disc portion and each middle rotational disc portion, as well as between each middle rotational disc portion, and each end rotational disc portion, when the speed increasing cog-wheels are inactivated, the speed increasing cog-wheels may lock up the output end rotational disc portions so as to allow the input end rotational disc portions to rotate and store energy and that in the mean time, the leaf spring units would cause the middle rotational disc portions to rotate so as to store the energy and that when the speed increasing cog-wheels are activated, the output end rotational disc portions may cause the middle rotational disc portions and the input end rotational disc portions to rotate to speed up the output of energy through the leaf spring units.

8. The energy storing device as in claim 1, wherein the energy storing units may be arranged in parallel so that the cog-wheels may distribute the energy to the energy storing units, and wherein energy may be output through the speed increasing cog-wheels, each of the energy storing units has its own torsion magnitude limiting unit and single-directional input bearing.

## Patentansprüche

1. Eine Energiespeichervorrichtung, in welcher Energie mittels Federtorsion gespeichert wird, aufweisend:
eine Mehrzahl von Zahnrädern, wobei jedes Eingangsende der Zahnräder mit einer Energiequelle verbunden ist, die in Form einer Rotationskraft vorliegt, und wobei der Energieausgang von den Zahnrädern in Form einer Torsion vorliegt;
eine Mehrzahl von Torsionsbetrag-Begrenzungseinheiten, welche mit den Ausgangsenden der Zahnräder verbunden sind, wobei, wenn der Betrag der Torsion einen vorbestimmten Wert der Torsionsbetrag-Begrenzungseinheiten überschreitet, die Torsionsbetrag-Begrenzungseinheiten die Torsion durch einen Leerlauf unterbrechen, um eine Beschädigung der Energiespeichereinheiten zu verhindern;
eine Mehrzahl von Unidirektional-Eingangslagern, welche mit den Ausgangsenden der Torsionsbetrag-Begrenzungseinheiten verbunden sind, um lediglich die unidirektionale Übertragung der Torsion von jeder der Torsionsbetrag-Begrenzungseinheiten zu dem entsprechenden Energiespeicher-Satz zu erlauben, und um die Übertragung der Rotationskraft in entgegengesetzter Richtung zu verhindern, um die Torsionsbetrag-Begrenzungseinheiten und die Zahnräder zu schützen;
eine Mehrzahl von Energiespeichereinheiten, wobei jede der Energiespeichereinheiten mindestens zwei Rotationsscheibenabschnitte aufweist, welche koaxial miteinander verbunden sind, und wobei eine Blattfedereinheit zwischen jedem Paar von Rotationsscheibenabschnitten vorgesehen ist, wobei die zwei Enden von jeder Blattfedereinheit mit einem zentralen Halteabschnitt und einer Haltenut verbunden sind und ein Ende jeder Blattfedereinheit in eine entgegengesetzte Richtung gebogen ist, um die Energiespeichereffizienz zu erhöhen; und
eine Mehrzahl von Drehzahl-Erhöhungs-Zahnrädern, welche mit den Ausgangsende-Rotationsscheibenabschnitten verbunden sind, wobei die Drehzahl-Erhöhungs-Zahnräder die Rotationsscheibenabschnitte sperren können, wenn die Drehzahl-Erhöhungs-Zahnräder deaktiviert werden, um den Rotationsscheibenabschnitten an den Ausgangsenden der Energiespeichereinheiten ein Rotieren zu erlauben, und somit Energie zu speichern, und die Drehzahl-Erhöhungs-Zahnräder können die Rotationsgeschwindigkeit der Ausgangsende-Rotationsscheibenabschnitte erhöhen, um die Energie abzugeben, wenn die Drehzahl-Erhöhungs-Zahnräder aktiviert werden.

2. Die Energiespeichervorrichtung gemäß Anspruch 1, wobei die Zahnräder mit einer Energie-Erzeugungseinheit verbunden sind, welche als eine Energiequelle fungiert, und wobei eine Kupplung, ein Schwungrad und ein Getriebe zwischen der Energie-Erzeugungseinheit und den Zahnrädern vorgesehen ist, wobei die Kupplung bereitgestellt ist, um die Übertragung der Energie von der Energie-Erzeugungseinheit zu dem Getriebe zu steuern, wobei das Schwungrad bereitgestellt ist, um den Energieausgang der Energie-Erzeugungseinheit durch Rotationsträgheit zu stabilisieren, und wobei das Getriebe bereitgestellt ist, um die Rotationsgeschwindigkeit der Energie-Erzeugungseinheit zu reduzieren, um den Betrag der Torsion zu erhöhen, um das Speichern von Energie zu erleichtern.

3. Die Energiespeichervorrichtung gemäß Anspruch 1, wobei die Ausgangsenden der Drehzahl-Erhöhungs-Zahnräder mit einem Generator verbunden sind, und wobei eine elektromagnetische Bremse, ein kontinuierlichen Drehzahl-Varüerer, eine Drehzahl-Steuereinheit, ein Schwungrad und eine Kupplung zwischen den Drehzahl-Erhöhungs-Zahnrädern und dem Generator vorgesehen sind, wobei die elektromagnetische Bremse bereitgestellt ist, um den Energieausgang der Drehzahl-Erhöhungs-Zahnräder zu reduzieren oder zu stoppen, der kontinuierliche Drehzahl-Varüerer bereitgestellt ist, um die Rotationsgeschwindigkeit des Energieausgangs aufrechtzuerhalten, die Drehzahl-Steuereinheit bereitgestellt ist, um die Rotationsgeschwindigkeit des Energieausgangs zu steuern, und das Schwungrad bereitgestellt ist, um den Energieausgang zu stabilisieren, und wobei die Kupplung bereitgestellt ist, um die Übertragung des Energieausgangs zu dem Generator zu steuern.

4. Die Energiespeichervorrichtung gemäß Anspruch 1, wobei ein zentraler Halteabschnitt in jedem Rotationsscheibenabschnitt zentral bereitgestellt ist, und wobei eine äußere Haltenut an einer äußeren Position jedes Rotationsscheibenabschnitts bereitgestellt ist und eine innere Haltenut in jedem zentralen Halteabschnitt bereitgestellt ist, wobei das innere Ende jeder Blattfedereinheit in der inneren Haltenut gehalten ist und das äußere Ende jeder Blattfedereinheit in eine entgegengesetzte Richtung gebogen ist und in der äußeren Haltenut gehalten ist.

5. Die Energiespeichervorrichtung gemäß Anspruch 1, wobei ein zentraler Halteabschnitt in jedem Rotationsscheibenabschnitt zentral bereitgestellt ist, und wobei eine äußere Haltenut an einer äußeren Position jedes Rotationsscheibenabschnitts bereitgestellt ist und eine innere Haltenut in jedem zentralen Halteabschnitt bereitgestellt ist, wobei das äußere Ende jeder Blattfedereinheit in der äußeren Haltenut gehalten ist und das innere Ende jeder Blattfedereinheit in eine entgegengesetzte Richtung gebogen ist und in der inneren Haltenut gehalten ist.

6. Die Energiespeichervorrichtung gemäß Anspruch 1, wobei eine wellenförmige Struktur auf der Oberfläche jeder Blattfedereinheit vorgesehen sein kann, um ihre Energiespeichereffizienz zu erhöhen.

7. Die Energiespeichervorrichtung gemäß Anspruch 1, wobei eine Mehrzahl von mittleren Rotationsscheibenabschnitten koaxial zwischen jedem Paar von End-Rotationsscheibenabschnitten vorgesehen sind, und wobei jeder Eingangsende-Rotationsscheibenabschnitt mit dem Ausgangsende der Unidirektional-Eingangslager verbunden ist und jeder Ausgangsende-Rotationsscheibenabschnitt mit den Drehzahl-Erhöhungs-Zahnrädern verbunden ist, und wobei eine Blattfedereinheit zwischen jedem End-Rotationsscheibenabschnitt und jedem mittleren Rotationsscheibenabschnitt sowie auch zwischen jedem mittleren Rotationsscheibenabschnitt und jedem End-Rotationsscheibenabschnitt vorgesehen ist, wobei, wenn die Drehzahl-Erhöhungs-Zahnräder deaktiviert werden, die Drehzahl-Erhöhungs-Zahnräder die Ausgangsende-Rotationsscheibenabschnitte sperren können, um den Eingangsende-Rotationsscheibenabschnitten ein Rotieren und Speichern von Energie zu erlauben, und dass in der Zwischenzeit die Blattfedereinheiten die mittleren Rotationsscheibenabschnitte zum Rotieren bringen würden, um die Energie zu speichern, und dass, wenn die Drehzahl-Erhöhungs-Zahnräder aktiviert werden, die Ausgangs-Rotationsscheibenabschnitte ein Rotieren der mittleren Rotationsscheibenabschnitte und der Eingangsende-Rotationsscheibenabschnitte bewirken können, um den Energieausgang durch die Blattfedereinheiten zu beschleunigen.

8. Die Energiespeichervorrichtung gemäß Anspruch 1, wobei die Energiespeichereinheiten parallel angeordnet sein können, sodass die Zahnrädern die Energie auf die Energiespeichereinheiten verteilen können, und wobei Energie durch die Drehzahl-Erhöhungs-Zahnräder abgegeben werden kann, wobei jede der Energiespeichereinheiten ihre eigene Torsionsbetrag-Begrenzungseinheit und ihr eigenes Unidirektional-Eingangslager hat.

## Revendications

1. Dispositif de stockage d'énergie dans lequel l'énergie est stockée par torsion de ressort, comprenant :
une pluralité de roues dentées, dans lequel chaque extrémité d'entrée des roues dentées est raccordée à une source d'énergie, qui se présente sous la forme d'une force de rotation et l'énergie produite par les roues dentées se présente sous la forme d'une torsion ;
une pluralité d'unités de limitation de grandeur de torsion, raccordées avec les extrémités de sortie des roues dentées, dans lequel si la grandeur de la torsion dépasse une valeur prédéterminée des unités de limitation de grandeur de torsion, les unités de limitation de grandeur de torsion interrompent la torsion au moyen du ralentissement pour empêcher l'endommagement des unités de stockage d'énergie ;
une pluralité de paliers d'entrée unidirectionnels, raccordés avec les extrémités de sortie des unités de limitation de grandeur de torsion pour permettre uniquement le passage unidirectionnel de la torsion à partir de chacune des unités de limitation de grandeur de torsion jusqu'à l'assemble de stockage d'énergie correspondant et pour empêcher le passage de la force de torsion dans la direction opposée afin de protéger les unités de limitation de grandeur de torsion et les roues dentées ;
une pluralité d'unités de stockage d'énergie, dans lequel chacune des unités de stockage d'énergie comprend au moins deux parties de disque rotatives, qui sont raccordées entre elles de manière coaxiale, et une unité de ressort à lames est prévue entre chaque paire de parties de disque rotatives, les deux extrémités de chaque unité de ressort à lames sont raccordées avec une partie de retenue centrale et une rainure de retenue et une extrémité de chaque unité de ressort à lames est pliée dans une direction opposée afin d'augmenter l'efficacité de stockage d'énergie ; et
une pluralité de roues dentées d'augmentation de vitesse, raccordées avec les parties de disque rotatives d'extrémité de sortie, dans lequel les roues dentées d'augmentation de vitesse peuvent verrouiller les parties de disque rotatives lorsque les roues dentées d'augmentation de vitesse sont désactivées afin de permettre aux parties de disque rotatives au niveau des extrémités de sortie des unités de stockage d'énergie de tourner et ainsi de stocker de l'énergie et les roues dentées d'augmentation de vitesse peuvent augmenter la vitesse de rotation des parties de disque rotatives d'extrémité de sortie pour produire de l'énergie lorsque les roues dentées d'augmentation de vitesse sont activées.

2. Dispositif de stockage d'énergie selon la revendication 1, dans lequel les roues dentées sont raccordées avec une unité de génération d'énergie, qui sert de source d'énergie, et un embrayage, un volant d'inertie et une boîte de transmission sont prévus entre l'unité de génération d'énergie et les roues dentées, l'embrayage est prévu pour contrôler le passage de l'énergie de l'unité de génération d'énergie à la boîte de transmission, le volant d'inertie est prévu pour stabiliser l'énergie produite de l'unité de génération d'énergie par le biais de l'inertie rotative et la boîte de transmission est prévue pour réduire la vitesse de rotation de l'unité de génération d'énergie pour augmenter la grandeur de torsion afin de faciliter le stockage d'énergie.

3. Dispositif de stockage d'énergie selon la revendication 1, dans lequel les extrémités de sortie des roues dentées d'augmentation de vitesse sont raccordées avec un générateur et un frein électromagnétique, une boîte à variation de vitesse continue, une unité de régulation de vitesse, un volant d'inertie et un embrayage sont prévus entre les roues dentées d'augmentation de vitesse et le générateur, le frein électromagnétique est prévu pour réduire ou arrêter la production d'énergie des roues dentées d'augmentation de vitesse, la boîte à variation de vitesse continue est prévue pour maintenir la vitesse de rotation de l'énergie produite, l'unité de régulation de vitesse est prévue pour réguler la vitesse de rotation de l'énergie produite et le volant d'inertie est prévu pour stabiliser l'énergie produite et dans lequel l'embrayage est prévu pour contrôler le passage de l'énergie produite jusqu'au générateur.

4. Dispositif de stockage d'énergie selon la revendication 1, dans lequel une partie de retenue centrale est prévue de manière centrale dans chaque partie de disque rotative, et dans lequel une rainure de retenue externe est prévue dans une position externe de chaque partie de disque rotative et une rainure de retenue interne est prévue dans chaque partie de retenue centrale, l'extrémité interne de chaque unité de ressort à lames est retenue dans la rainure de retenue interne et l'extrémité externe de chaque unité de ressort à lames est pliée dans une direction opposée et retenue dans la rainure de retenue externe.

5. Dispositif de stockage d'énergie selon la revendication 1, dans lequel une partie de retenue centrale est prévue de manière centrale dans chaque partie de disque rotative et dans lequel une rainure de retenue externe est prévue dans une position externe de chaque partie de disque rotative et une rainure de retenue interne est prévue dans chaque partie de retenue centrale, l'extrémité externe de chaque unité de ressort à lames est retenue dans la rainure de retenue externe et l'extrémité interne de chaque unité de ressort à lames est pliée dans une direction opposée et retenue dans la rainure de retenue interne.

6. Dispositif de stockage d'énergie selon la revendication 1, dans lequel un motif ondulé peut être prévu sur la surface de chaque unité de ressort à lames afin d'améliorer son efficacité de stockage d'énergie.

7. Dispositif de stockage d'énergie selon la revendication 1, dans lequel une pluralité de parties de disque rotatives centrales sont prévues de manière coaxiale entre chaque paire de parties de disque rotatives d'extrémité, et dans lequel chaque partie de disque rotative d'extrémité d'entrée est raccordée avec l'extrémité de sortie des paliers d'entrée unidirectionnels et chaque partie de disque rotative d'extrémité de sortie est raccordée avec les roues dentées d'augmentation de vitesse, et dans lequel une unité de ressort à lames est prévue entre chaque partie de disque rotative d'extrémité et chaque partie de disque rotative centrale, ainsi qu'entre chaque partie de disque rotative centrale, et chaque partie de disque rotative d'extrémité, lorsque les roues dentées d'augmentation de vitesse sont désactivés, les roues dentées d'augmentation de vitesse peuvent verrouiller les parties de disque rotatives d'extrémité de sortie afin de permettre aux parties de disque rotatives d'extrémité d'entrée de tourner et de stocker de l'énergie et en ce que, pendant ce temps, les unités de ressort à lames amènent les parties de disque rotatives centrales à tourner afin de stocker de l'énergie et en ce que lorsque les roues dentées d'augmentation de vitesse sont activées, les parties de disque rotatives d'extrémité de sortie peuvent amener les parties de disque rotatives centrales et les parties de disque rotatives d'extrémité d'entrée à tourner pour accélérer la production d'énergie par les unités de ressort à lames.

8. Dispositif de stockage d'énergie selon la revendication 1, dans lequel les unités de stockage d'énergie peuvent être agencées en parallèle de sorte que les roues dentées peuvent distribuer l'énergie aux unités de stockage d'énergie, et dans lequel l'énergie peut être produite par les roues dentées d'augmentation de vitesse, chacune des unités de stockage d'énergie a sa propre unité de limitation de grandeur de torsion et son palier d'entrée unidirectionnel.
